# EUROPEAN PATENT APPLICATION

(11) **EP 3 309 802 A1**
(43) Date of publication of application: **18.04.2018**
(21) Application number: 17001633.1
(22) Date of filing: 05.10.2017
(51) Int. Cl.: H01F 7/06, H01F 7/16, H02K 35/00, B06B 1/04, H01F 7/02, G06F 3/01

(54) **THIN ELECTROMAGNETIC HAPTIC ACTUATOR**

(30) Priority: 12.10.2016 US 201615291669
(71) Applicant: Immersion Corporation, San Jose CA 95134 (US)
(72) Inventor: KHOSHKAVA, Vahid, Montreal QC, H2W 2R2 (CA); CRUZ-HERNANDEZ, Juan Manuel, Montreal QC, H2W 2R2 (CA)
(74) Representative: Müller-Boré & Partner Patentanwälte PartG mbB

(57) **Abstract**

An electromagnetic haptic actuator comprises a first planar magnetic layer and a second planar magnetic layer. The first planar magnetic layer comprises a first substrate and a first planar conductive coil formed on the first substrate. The second planar magnetic layer comprises a planar magnet and spaced adjacent to the first planar magnetic layer with a gap in between the first planar magnetic layer and second planar magnetic layer. At least one of the first and second planar magnetic layers is flexible such that a portion of the first planar magnetic layer and a portion of the second planar magnetic layers are movable relative to each other.

## Description

### Technical Field

This disclosure relates to haptic actuators, and more particularly to thin electromagnetic haptic actuators.

### Background

Transducers, such as actuators and sensors suitable for inclusion in thin structures, such as wearable articles and ultrathin computer-human interfaces, are being developed. Examples include pressure-sensitive keypads on computers or smartphones and haptic notification devices in articles of clothing or wristbands. Such actuators and sensors provide advantages such as enabling compact designs for mobile computing devices and integration of sensors and actuators into "smart" wearable articles.

While certain thin transducers, such as piezoelectric transducers, exist, development of thin haptic actuators with advantageous characteristics, such as flexible structures and low operating voltages, is continuing.

### Summary

This disclosure relates to an electromagnetic haptic actuator, such as an actuator or sensor, that is very thin, can operate at low voltages and can be flexible.

In one aspect, a haptic actuator according to this disclosure includes a first planar magnetic layer having a first planar conductive coil, such as a conductive coil in a spiral pattern, which can be formed on a substrate, which can be a flexible substrate. The planar conductive coil can be flat or curved. The first planar magnetic layer can further include a flux concentrator, such as silicon steel, ferrites and iron powder composites. The haptic actuator further includes a second planar magnetic layer spaced apart from the first planar magnetic layer. The second planar magnetic layer can be made of a permanent magnetic material or an electromagnet including a planar conductive coil. The second planar magnetic layer can be formed on a substrate, which can be a flexible substrate. At least a portion of the second planar magnetic layer and a portion of the first planar magnetic layer are movable relative to each other. In the example of an actuator, at least a portion of the second planar magnetic layer and a portion of the first planar magnetic layer are movable relative to each other when the first planar conductive coil is energized. An electrical signal applied to the first planar conductive coil actuates the second planar magnetic layer relative to the first; conversely, actuating the second planar magnetic layer relative to the first generates an electrical signal in the first planar conductive coil.

In another aspect, a wearable article wearable by a person includes a haptic actuator described above and a controller electrically connected to the haptic actuator. The controller is configured to energize the first planar conductive coil to generate a mechanical stimulation, and the haptic actuator is positioned relative to the wearable article for the person wearing the article to perceive the mechanical stimulation. In another aspect, the haptic actuator is positioned relative to the wearable article to receive a mechanical input (such as by impacting the haptic actuator in a shoe, or vibration from the voice of the person wearing the article) from the person wearing the article and configured to generate an electrical signal at the terminals of the first planar conductive coil in response to the mechanical input, and controller is configured to receive the electrical signal generate a control signal in response to the electrical signal. In one aspect, the first and second planar magnetic layers can be spaced apart by a portion of the wearable article, such a portion of the textile making up the article.

In another aspect, a method of generating a mechanical signal includes positioning a first planar magnetic layer having a first planar conductive coil adjacent to, and spaced apart (such as separated by a layer of textile that is a part of a wearable article) from, a second planar magnetic layer spaced apart from the first planar magnetic layer. The method further includes applying an electrical current through the first planar conductive coil to generate a relative movement between a portion of the first planar magnetic layer and a portion of the second planar magnetic layer. In another aspect, a method for generating an electrical signal in response to a mechanical actuation includes positioning a first planar magnetic layer having a first planar conductive coil adjacent to, and spaced apart (such as separated by a layer of textile that is a part of a wearable article) from, a second planar magnetic layer spaced apart from the first planar magnetic layer. The method further includes moving a portion of the first planar magnetic layer relative to a portion of the second planar magnetic layer, thereby generating an electrical signal in the first planar conductive coil.

### Brief Description of the Drawings

Figure 1 (a) is a schematic perspective exploded view of an electromagnetic haptic actuator according to an aspect of the present disclosure.
Figure 1(b) is a plan view of the components of the haptic actuator illustrated in Figure 1(a).
Figure 1(c) is a side view of an assembled haptic actuator illustrated in Figure 1(a).
Figure 2(a) is a schematic perspective view of a wearable article incorporating a haptic actuator according to an aspect of the present disclosure.
Figure 2(b) is a side view of the wearable article illustrated in Figure 2(a).
Figure 3 is an exploded view of a stacked conductive coil for a haptic actuator according to an aspect of the present disclosure.
Figure 4 schematically shows a system including a controller and a haptic actuator according to an aspect of the present disclosure.

### Detailed Description

Various examples will be described in detail, some with reference to the drawings, wherein like reference numerals represent like parts and assemblies throughout the several views. Reference to various examples does not limit the scope of the claims attached hereto. Additionally, any examples set forth in this specification are not intended to be limiting and merely set forth some of the many possible embodiments for the appended claims.

Whenever appropriate, terms used in the singular also will include the plural and vice versa. The use of "a" herein means "one or more" unless stated otherwise or where the use of "one or more" is clearly inappropriate. The use of "or" means "and/or" unless stated otherwise. The use of "comprise," "comprises," "comprising," "include," "includes," "including," "has," and "having" are interchangeable and not intended to be limiting. The term "such as" also is not intended to be limiting. For example, the term "including" shall mean "including, but not limited to."

In general terms, this disclosure relates to thin electromagnetic haptic actuators for delivering haptic effects, such as electromagnetic actuators and sensors, and devices, such as tablet computers and wearable articles incorporating such haptic actuators. A haptic effect can be any type of tactile sensation delivered to a person. In some embodiments, the haptic effect embodies a message such as a cue, notification, or more complex information. In alternative embodiments, the haptic effect can be used to enhance a user's interaction with a device by simulating a physical property or effect such as friction, flow, detents, pressing, releasing, sliding, tapping, clicking, scrolling, dragging, and panning.

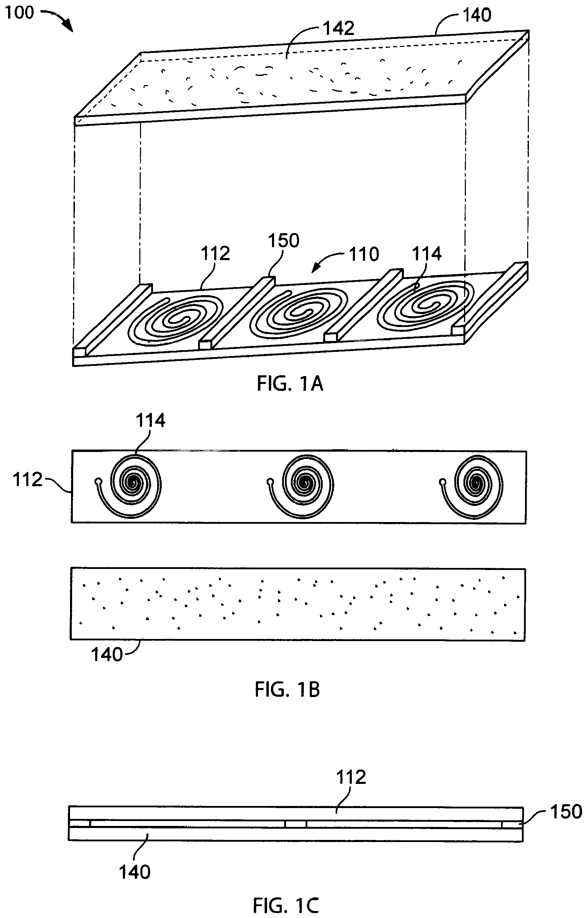

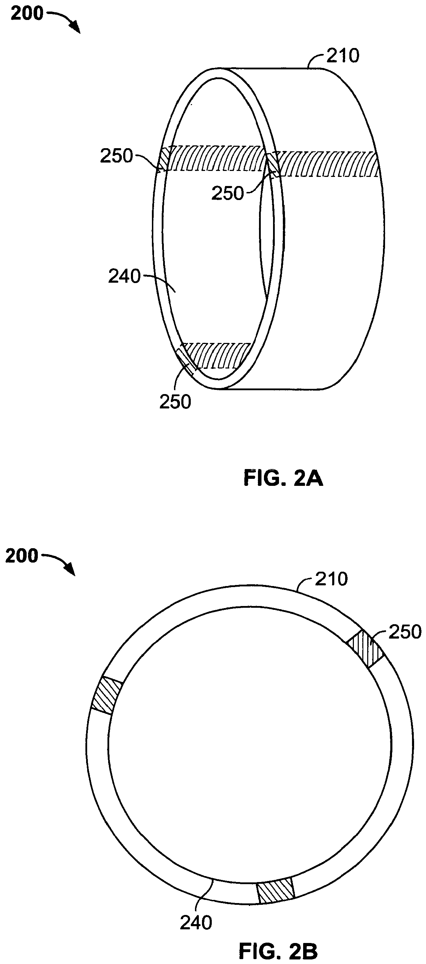

Referring now to Figure 1, an electromagnetic haptic actuator 100 has a first planar magnetic layer 110 and a second planar magnetic layer 140. The two layers overlay each other but are spaced apart by spacers 150. The first planar magnetic layer 110 has a planar substrate 112 and planar coils 114 formed on the substrate 112. The planar magnetic layer 110 is illustrated in Figure 1 as flat, but it alternatively can be flexed or bent into a curved configuration, as the example in Figure 2 shows. In a watchband, for example, the planar magnetic layer 110 can be planar or substantially planer when the watchband is open and laid flat, and then it can be curved when the watchband is wrapped around a user's wrist.

The substrate 112 can be either a rigid or flexible substrate in various embodiments. For example, substrate 112 can be made of a soft polymeric material, such as silicone, natural rubber and synthetic rubber, or a rigid material, such as polyethylene terephthalate (PET), polycarbonate (PC), Polyethylene Napthalene (PEN), silicon based polymers, polyurethanes, thermoplastics, thermoplastic-elastomer, thermoset, and polymer composites filled with natural or synthetic fillers. The substrate 112 can be of any thickness suitable for specific application. For example, the substrate 112 can have a thickness ranging from 50 micrometers to 2.0 millimeters, from 100 micrometers to 1.0 millimeters, or from 300 micrometers to 0.70 millimeters. Other embodiments can have a thickness that is thinner or thicker than the thicknesses provided in the foregoing ranges. It is noted that substrate 112 can be flexible if it is sufficiently thin, even though the material it is made of may be characterized as "rigid." Depending on the application, a transparent or an opaque material can be used for the substrate 112. The substrate 112 can be made to have other properties suitable for specific applications and/or environment. For example, a high temperature-resistant material, such as Zytel® long chain polyamides (LCPA), can be used if the haptic actuator is expected to generate heat or placed in a high-temperature environment.

Each coil 114 in this example is made of a conductive material. The conductive material can be any conductor suitable for the specific application and can be transparent or opaque. Examples of conductive materials include metals (such as aluminum, gold, silver, copper, and chromium), graphene, graphite, transparent conducting oxides ("TCO," such as tin-doped indium oxide ("ITO") and aluminum-doped zinc oxide ("AZO")), transparent carbon nanotubes (CNTs) electrodes, transparent conducting polymers (such as Poly(3,4-ethylenedioxythiophene) ("PEDOT"), Poly(3,4-ethylenedioxythiophene):poly(styrene sulfonate) ("PEDOT :PSS") and Poly(4,4-dioctylcyclopentadithiophene)). Additionally, the coil 144 can be formed with conductive nanoparticles or nanowires, and can have any suitable nano-shapes or -geometries. Other embodiments of the coil can have a scale other than a nan-scale.

Each coil 114 in this example is planar in structure. For example, each coil 114 can be formed by a conductive line in a planar spiral pattern with a progressively larger distance from the center portion of the coil 114. The coil 114 is planar in that it is very thin relative to its width and length providing a flat structure that lays flat or can be curved. In at least some embodiment, the thin structure of the flat coil can flex or bend so it can accommodate changing shapes of articles such as wristbands and clothing.

The conductive coil can be formed on the substrate by any suitable method. For example, a masking technique may be used, where a mask is applied to the substrate to expose the areas where the conductive material is to be deposited but the remaining areas are covered. Masking can be accomplished using an adhesive tape or a developed photoresist, or any other suitable method. A layer of conductive material is then deposited on the masked substrate by chemical/physical vapor deposition or any other suitable technique. The thickness of the deposited metal can range from nanometer to micrometer scale or greater depending on the magnitude of the electrical current used in specific application. In another example, a conductive film can be deposited on the substrate. Portions of the film can be subsequently removed by, for example, selective etching with photolithographic techniques well known in the microelectronic industry, leaving behind the desired conductive coil. In another example, a pre-formed conductive coil can be transferred on to the substrate 112 and affixed to the substrate 112 by any suitable method, including gluing. In a further example, conductive coils 114 can be printed on to the substrate 112 using 3-dimensional printing ("3-D printing") techniques.

The haptic actuator 100 in this example further includes a second planar (flat or curved) magnetic layer 140. In one example, as shown in Figures 1(a), 1(b) and 1(c), the second planar magnetic layer 140 has a matrix 142 of a polymeric material with magnet particles embedded in it. The polymeric material can be chosen from those described above for the substrate 112 in the first planar magnetic layer 110; the magnet particles can be nanoparticles of magnet materials such as carbon iron nanoparticles or rare-earth (e.g., neodymium) nanoparticles.

In one aspect of the present disclosure, the second planar magnetic layer 140 can be made by the following method: The material for the polymeric matrix can be dissolved in an appropriate solvent. Next, magnet nanoparticles can be dispersed into the solution. If necessary, the nanoparticles can be stabilized to prevent them from coagulating. For example, certain molecules can be attached or tethered to the nanoparticle surfaces to overcome the attractive forces between nanoparticles. The solvent can then be dried.

For the non-soluble polymeric materials, such as polypropylene and polyethylene, a melt mixing technique can be used. In the melt mixing, a polymer is first added to a mixing chamber and heated up to its melting temperature. The polymer melt behaves like a liquid. Then, the nanoparticles of a magnetic material are then added to the melt at high temperatures. The polymer melt, with the dispersed nanoparticles, can later be molded to any desired shape using a hot press equipment.

The second planar magnetic layer 140 can be made to be either transparent or opaque. In particular, it can be made transparent by using a transparent matrix material and magnetic nanoparticles.

In another aspect of the present disclosure. The second planar magnetic layer 140 can also be made of an electromagnetic layer similar to the first planar magnetic layer 110.

In a further aspect, the first planar magnetic layer 110 and second planar magnetic layer 140 are adjacent to, and spaced apart from, each other. More specifically, the planar conductive coil 114 adjacent to, and spaced apart from, the second planar magnetic layer 140. The first planar magnetic layer 110 (or coil 114) can be spaced apart from the second planar magnetic layer in any suitable manner, including by using discrete spacers 150 as illustrated in Figure 1 (c), or a layer of a flexible material, such as a portion of the fabric of an item of clothing to which the haptic actuator 100 is attached. In one example, the substrate 112 can be made of a soft material, such as silicone or rubber, and can be the spacer itself. That is, a haptic actuator 100 can be formed of a flexible substrate 112 (such as silicone) with a low Young's modulus such that the thickness of substrate itself can change under the electromagnetic force between a planar coil 114 on one side of the substrate 112 and the second planar magnetic layer on the other side of the substrate 112. In a further example, a haptic actuator 100 can be formed of a flexible substrate 112 (such as silicone) as described above, with a planar coil 114 on one side of the substrate 112 and another planar coil on the other side of the substrate 112. That is, instead of a combination of an electromagnet on one side of the soft substrate and a permanent magnet on the other, electromagnets are formed on both sides of the soft substrate. When both coils are energized, for example, they can attract or repel each other, and become closer or farther apart from each other due to the deformation of the substrate. In both examples above, the coils and permanent magnet layers can be flexible and change shape (such as bend) with the substrate.

The spacers 150 have a thickness, which in part controls the magnitude of the electromagnetic force or the relative acceleration between the two planar magnetic layers 110,140 when the haptic actuator is used as an actuator. Other factors affecting the electromagnetic force or relative acceleration include the stiffness of each of the two planar magnetic layers 110,140, the stiffness of the spacers 150, the signal current and frequency applied through the first planar conductive coil, the number of windings in the first planar conductive coil, concentration of the magnetic nanoparticles and magnetic permeability of the medium inside the coil 114 and between the planar magnetic layers 110,114. In one example, the space between the windings of the conductive coil 114 and/or the space between the conductive coil and the second planar magnetic layer 140 can be at least partially filled with a flux concentrator material, such at silicon steel particles to minimize magnetic flux leakage, thereby maximize electromagnetic force between the layers 110,114.

The acceleration can be 1g or higher (where g is the gravitational acceleration at the Earth's surface and is nominally 9.8 kg/s²) peak-to-peak and depends on the strength and the shape of the applied current, concentration of the magnetic nanomagnetic particles, and the space between the coil 114 and second magnetic layer 140. In one example, with the mass of the moving part of about 10 grams, the actuation force would be about 200 mN. In one aspect of the present disclosure, the frequency of the current applied through the first planar conductive coil 114 can be adjusted relative to a natural frequency of the moving system (the first planar magnetic layer 110, the second planar magnetic layer, or both) to achieve a desired electromechanical conversion coefficient (efficiency). For example, the current applied through the first planar conductive coil 114 can be set to at or near a resonance frequency of the moving system to achieve the maximum or near-maximum electromechanical conversion coefficient. Alternatively, the applied current can be tuned to any other frequency to produce a desired vibration amplitude. For example, the frequency of the applied signal can be in a range that produces a vibration amplitude that is at least 50%, 75%, or 90% of the resonance amplitude. In other embodiment, the acceleration can be about 2g peak-to-peak or higher. Other embodiments can have an acceleration lower than 1 g peak-to-peak.

The haptic actuator according to certain aspects of the present disclosure can be used in various devices. For example, the flat haptic actuator 100 shown in Figure 1 can be included in a mobile device such as a tablet computer or smartphone as an input device, in which a mechanical actuated (such as pressing by finger) motion between the first and second planar magnetic layers 110,140 induces an electrical signal in the coil 114. The haptic actuator 100 can also be used as an actuator to provide various mechanical outputs, including haptic feedback and vibrational notification. The haptic actuator can also be used as the source of vibration for speakers and/or earphones.

In other examples, the haptic actuator according to certain aspects of the present disclosure can be incorporated into wearable articles such as clothing; footwear; prosthetics such as artificial limbs; headwear such as hats and helmets; athletic equipment worn on the body; protective equipment such as ballistic vests, helmets, and other body armor; eyeglasses; accessories such as neckties and scarfs; belts and suspenders; jewelry such as bracelets, necklaces, and watches; and anything else that can be worn on the body. For example, these actuators can be integrated into wearables textiles, such as shirts, blouses and pants. The actuators can be integrated into such wearables in any suitable area of the garment, including areas that can have a relative movement, including such parts as cuffs, collars and buttoned plackets. One example of a wearable article is a bracelet, such as the one 200 shown in Figures 2(a) and 2(b). The bracelet 200 in one example measures about 15 cm in circumference and about 2 cm in width, but can be other sizes depending on specific application. The bracelet 200 includes an outer layer 210 and an inner layer 240; the two layers 210,240 are spaced apart by spacers 250. The inner layer 210 can have a similar construction as the first magnetic layer 110, with a substrate and one or more coils (not shown); the outer layer 240 can have a similar construction as the second magnetic layer 140, with a polymeric matrix and magnetic nanoparticles dispersed within the matrix. The relative positions of the two layers 210,240 can also be reversed, with the outer layer comprising a substrate and one or more coils, and the inner layer comprising a polymeric matrix and magnetic nanoparticles dispersed within the matrix. Either layer 210,240 can also be any other magnetic layer described in the present disclosure. The spacers 250 divide the space between the outer and inner layers 210,240 in to multiple regions, one or more of which can be constructed as a haptic actuator similar to those shown in Figure 1, with an outer magnetic layer formed on the outer layer 210, and an inner magnetic layer formed on the inner layer 240. A controller (not shown), such as a wireless transceiver (such as a Bluetooth or infrared transceiver), can be housed in another of the multiple regions between the outer and inner layers 210,240 and connected to the haptic actuator to provide vibrational notification when, for example, a mobile phone to which the controller is paired via wireless connection receives a message or email.

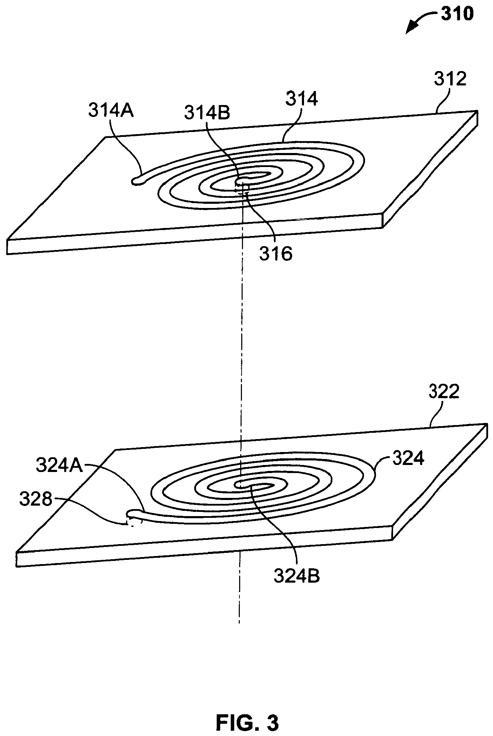

In another aspect of the present disclosure, the first planar magnetic layer 110 can include multiple layers of planar conductive coils to achieve a stronger electromagnetic force. For example, as shown in Figure 3, the first planar magnetic layer 310 includes a first substrate 312, and a first planar conductive coil 314 formed on top of the first substrate 312 as in the first planar magnetic layer 110 in Figure 1. The first planar magnetic layer 310 further includes a second substrate 322, and a second planar conductive coil 324 formed on top of the second substrate 322. The first planar conductive coil 314 has an outer end 314A and inner end 314B; the second planar conductive coil 324 has an outer end 324A and inner end 324B. A through hole is formed in the first substrate 312 and accommodates a VIA 316 connected to the second end 314B; a through hole is formed in the second substrate 322 and accommodates a VIA 328 connected to the first end 324A. When the substrates 312,322 are stacked on top of each other in register, second end 314B and second end 324B are aligned with each other and connected with each other by the VIA 316. The first coil 314 and second coil 324 in this example are spirals in opposite directions, and when they are connected to each other as described above, they create magnetic fields that are additive to each other when a voltage is applied between the ends 314A and 324A. Alternatively, the second conductive coil 324 can be formed on the opposite side of the first substrate 312. The second substrate 324 is thus not needed. In another example, additional layers of conductive coils may be added and serially connected to the coils 314 and 324, for example, through VIA 328.

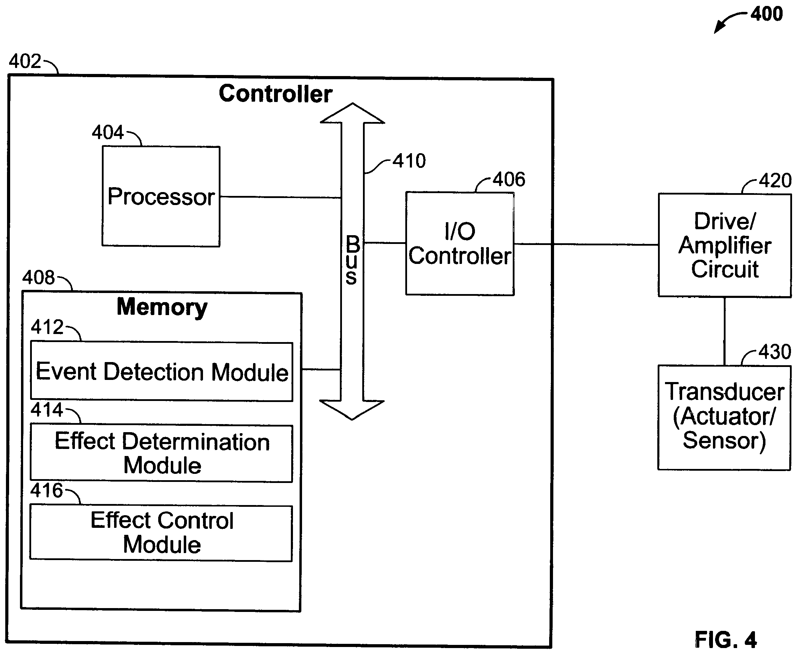

The haptic actuator (actuator or sensor) disclosed herein finds applications in a variety of apparatuses and processes. Referring to Figure 4, in one example, a system 400 employing a haptic actuator 430 such as ones described above also includes a controller 402. The controller 402 generally includes a bus 410, a processor 404, an input/output (I/O) controller 406 and a memory 408. The bus 402 couples the various components of the controller 402, including the I/O controller 406 and memory 408, to the processor 404. The bus 410 typically comprises a control bus, address bus, and data bus. However, the bus 410 can be any bus or combination of busses suitable to transfer data between components in the controller 402.

The processor 404 can comprise any circuit configured to process information and can include any suitable analog or digital circuit. The processor 404 can also include a programmable circuit that executes instructions. Examples of programmable circuits include microprocessors, microcontrollers, application specific integrated circuits (ASICs), programmable gate arrays (PGAs), field programmable gate arrays (FPGAs), or any other processor or hardware suitable for executing instructions. In the various embodiments, the processor can comprise a single unit, or a combination of two or more units, with the units physically located in a single controller or in separate devices.

The I/O controller 406 comprises circuitry that monitors the operation of the controller 402 and peripheral or external devices. The I/O controller 406 also manages data flow between the controller 402 and peripherals or external devices. The external devices can reside in the same device in which the system 400 is incorporated or can be external to the device in which the system 400 is incorporated. Examples of peripheral or external devices with which the I/O controller 406 can interface include switches, sensors, external storage devices, monitors, input devices such as keyboards, mice or pushbuttons, external computing devices, mobile devices, and transmitters/receivers.

The memory 408 can comprise volatile memory such as random access memory (RAM), read only memory (ROM), electrically erasable programmable read only memory (EEPROM), flash memory, magnetic memory, optical memory or any other suitable memory technology. The memory 408 can also comprise a combination of volatile and nonvolatile memory.

The memory 408 is configured to store a number of program modules for execution by the processor 404. The modules can, for example, include an event detection module 412, an effect determination module 414, and an effect control module 416. Each program module is a collection of data, routines, objects, calls and other instructions that perform one or more particular task. Although certain program modules are disclosed herein, the various instructions and tasks described for each module can, in various embodiments, be performed by a single program module, a different combination of modules, modules other than those disclosed herein, or modules executed by remote devices that are in communication with the controller 402.

The event detection module 412 is programmed to evaluate received event data to determine if the event data is associated with a predetermined event, such as a haptic effect. The event data can comprise data generated by an event occurring in a device in which the system 400 is incorporated; examples of such devices are provided herein. Alternatively, the event data can comprise data generated by a device or system that is separate from the device incorporating the system 400. An event can, for example comprise, an individual input (e.g., a button press, the manipulation of a joystick, user interaction with a touch sensitive surface, tilting or orienting a user interface device). In another example, the event can comprise a system status (e.g., low battery, low memory, an incoming call), a sending of data, a receiving of data, or a program event (e.g., a game program producing the explosions, gunshots, collisions, interactions between characters, bumpy terrains).

In some example embodiments, the occurrence of an event is detected by one or more sensors, e.g. external device(s). Examples of sensors include haptic actuators as described above (for example those described in connection with Figures 1-3); acoustical or sound sensors such as microphones; vibration sensors; chemical and particle sensors such as breathalyzers, carbon monoxide and carbon dioxide sensors, and Geiger counters; electrical and magnetic sensors such as voltage detectors or hall- effect sensors; flow sensors; navigational sensors or instruments such as GPS receivers, altimeters, gyroscopes, or accelerometers; position, proximity, and movement-related sensors such as piezoelectric materials, rangefinders, odometers, speedometers, shock detectors; imaging and other optical sensors such as charge-coupled devices (CCD), CMOS sensors, infrared sensors, and photodetectors; pressure sensors such as barometers, piezometers, and tactile sensors; force sensors such as piezoelectric sensors and strain gauges; temperature and heat sensors such as thermometers, calorimeters, thermistors, thermocouples, and pyrometers; proximity and presence sensors such as motion detectors, triangulation sensors, radars, photo cells, sonars, and hall-effect sensors; biochips; biometric sensors such as blood pressure sensors, pulse/ox sensors, blood glucose sensors, and heart monitors. Additionally, the sensors can be formed with smart materials, such as piezo-electric polymers, which in some embodiments function as both a sensor and an actuator. Additional sensors are disclosed in U.S. Patent 8,659,571, entitled "Interactivity Model for Shared Feedback on Mobile Devices," the entire disclosure of which is hereby incorporated by reference.

Upon the event detection module 412 determining that event data is associated with a haptic effect, the effect determination module 414 determines which effect, such as a haptic effect, to deliver. An example technique that the effect determination module 414 can use to determine a haptic effect includes rules programmed to make decisions to select a haptic effect. Another example technique that can be used by the effect determination module 414 to select a haptic effect includes lookup tables or databases that relate the haptic effect to the event data.

Upon the effect determination module 414 determining which haptic effect to deliver, the effect control module 416 directs generation of a haptic signal. The effect control module controls communication of signal parameters defined by the haptic data to the I/O controller 406. The signal parameters define the drive signal that is applied to the haptic actuator 430. Examples of parameters that can be defined by the haptic data includes frequency, amplitude, phase, inversion, duration, waveform, attack time, rise time, fade time, and lag or lead time relative to an event.

The I/O controller 406 uses the signal parameters to generate a haptic signal embodying the haptic data and communicates the haptic signal to the actuator drive circuit 420, which can comprise drivers, amplifiers, and other components for processing the haptic signal into a haptic drive signal. The actuator drive circuit 420 applies the haptic drive signal to the haptic actuator 430, which then delivers the haptic effect.

The various embodiments described above are provided by way of illustration only and should not be construed to limit the claims attached hereto. Those skilled in the art will readily recognize various modifications and changes that may be made without following the example embodiments and applications illustrated and described herein, and without departing from the true spirit and scope of the following claims.

## Claims

1. An electromagnetic haptic actuator, comprising:
a first planar magnetic layer comprising:
a first substrate;
a first planar conductive coil formed on the first substrate; and
a second planar magnetic layer comprising a planar magnet and spaced adjacent to the first planar magnetic layer with a gap in between the first planar magnetic layer and second planar magnetic layer;
at least one of the first and second planar magnetic layers being flexible such that a portion of the first planar magnetic layer and a portion of the second planar magnetic layers are movable relative to each other.

2. The electromagnetic haptic actuator of claim 1, wherein the first planar conductive coil comprises a conductive line configured in a planar spiral pattern having a central portion, with the conductive line at a progressively greater distance from the central portion.

3. The electromagnetic haptic actuator of any one of the preceding claims, wherein the first substrate comprises a polymer film having a thickness ranging from about 50 micrometers to about 2.0 millimeters.

4. The electromagnetic haptic actuator of any one of the preceding claims, wherein the second planar magnetic layer comprises a planar permanent magnet layer, wherein the planar permanent magnet layer preferably comprises a planar polymeric matrix and magnet nanoparticles embedded in the matrix.

5. The electromagnetic haptic actuator of any one of the preceding claims, wherein the second planar magnetic layer comprises a planar permanent magnet layer, the planar permanent magnet layer comprises a planar polymeric matrix and magnet nanoparticles embedded in the matrix.

6. The electromagnetic haptic actuator of any one of the preceding claims, further comprising a spacer separating the first planar conductive coil from the second planar magnetic layer by a distance, wherein the space preferably comprises a layer of foam, rubber or fabric.

7. The electromagnetic haptic actuator of any one of the preceding claims, wherein the planar magnetic layers are curved.

8. The electromagnetic haptic actuator of any one of the preceding claims, wherein the second planar magnetic layer comprises a planar electromagnetic layer.

9. The electromagnetic haptic actuator of any one of the preceding claims, wherein the first planar magnetic layer further comprises a second planar conductive coil positioned on an opposite side of the first substrate and in an overlaying relationship to the first planar conductive coil, the first and second planar conductive coils being connected in series and configured to produce mutually constructive magnetic fields when a current is passes through the first and second planar conductive coils.

10. An electronic device, comprising:
an electromagnetic haptic actuator of any one of the preceding claims; and
a controller electrically connected to the planar conductive coil of the electromagnetic haptic actuator and configured to apply an electrical signal to the coil to generate a relative movement between the first and second planar magnetic layers.

11. The electronic device of claim 10, wherein the haptic actuator has a resonance frequency in relative vibration between the first and second planar magnetic layers, and wherein the controller is configured to apply a signal with a frequency in a range that produces a vibration amplitude that is at least 50% of the resonance amplitude, wherein the controller preferably is configured to apply a signal with a frequency in a range that produces a vibration amplitude that is at least 90% of the resonance amplitude.

12. The electronic device of claim 10 or 11, further comprising an article wearable by a person, the electromagnetic haptic actuator being affixed to the article and positioned, when the article is worn by a person, to provide mechanical stimulation to the person upon an electrical signal being applied to the first planar conductive coil, wherein the electromagnetic haptic actuator preferably further comprising a spacer separating the first planar conductive coil from the second planar magnetic layer by a distance, the spacer comprising a portion of the wearable article.

13. A method of generating a mechanical signal, the method comprising:
positioning a first planar magnetic layer of an electromagnetic haptic actuator in proximity to a second planar magnetic layer of the haptic actuator, the first planar magnetic layer comprising a planar conductive coil, and the second planar magnetic layer comprising a magnet;
applying an electrical signal to the planar conductive coil;
wherein positioning the first planar magnetic layer in proximity to a second planar magnetic layer comprises positioning the two layers sufficiently close for the electrical signal applied to the planar conductive coil to generate an acceleration in a relative motion between the first and second planar magnetic layers.

14. The method of claim 13, wherein the haptic actuator has a resonance frequency in relative vibration between the first and second planar magnetic layers, and wherein the applying an electrical signal to the planar conductive coil comprises applying a signal with a frequency in a range that produces a vibration amplitude that is at least 50% of the resonance amplitude.

15. The method of claim 13 or 14, further comprising affixing the haptic actuator to an article wearable by a person, wherein the applying an electrical signal to the planar conductive coil comprises applying the electrical signal to generate a mechanical vibration, wherein the affixing step further comprises affixing the haptic actuator at a location on the wearable article such that the person wearing the article is able to perceive the vibration, wherein applying an electrical signal to the planar conductive coil preferably comprises applying an electrical signal to the planar conductive coil to generate an acceleration of about 1g peak-to-peak or greater between a portion of the first planar magnetic layer and a portion of the second planar magnetic layer.
